# EUROPÄISCHE PATENTSCHRIFT

(11) **EP 1 000 835 B1**
(45) Veröffentlichungstag und Bekanntmachung des Hinweises auf die Patenterteilung: **22.09.2004**
(21) Anmeldenummer: 99122006.2
(22) Anmeldetag: 11.11.1999
(51) Int. Cl.: B62D 1/06

(54) **Lenkrad mit metallischem Skelett**
Steering wheel with metallic frame
Volant de direction avec armature métallique

(30) Priorität: 12.11.1998 DE 29820305 U
(43) Veröffentlichungstag der Anmeldung: 17.05.2000
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Degwert, Hartmut, Dipl.-Phys.

(56) Entgegenhaltungen:
- DE-A- 19 900 329
- US-A- 3 714 844
- US-A- 4 811 472
- US-A- 5 490 435

## Beschreibung

Die Erfindung betrifft ein Lenkrad mit einem metallischen Skelett, das einen Nabenbereich, Speichen und einen Kranz umfaßt und das durch Gießen einteilig mit einem zumindest im Kranzbereich offenen, U- oder V-förmigen Querschnitt hergestellt ist, wobei der Kranz, bezogen auf eine normale Lenkradposition im Fahrzeug bei Geradeausfahrt, im oberen und unteren Bereich einen zur Lenkrad vorderseite hin offenen Querschnitt aufweist. Eine Konstruktion dieser Art ist aus US-A-5 490 435 bekannt.

Bei derartigen Lenkrädern besteht das Skelett in der Regel aus Leichtmetallegierungen auf der Basis von Aluminium oder Magnesium, die im Hinblick auf die Verarbeitung im Druckgußverfahren und auf die mechanischen Beanspruchungen konzipiert sind. Die Lenkräder weisen außerdem eine Ummantelung vorzugsweise aus einem geschäumten Kunststoff auf, der bei der festigkeitsmäßigen Auslegung der Lenkräder keinen oder allenfalls einen sehr begrenzten Beitrag liefern kann. Die mechanischen Kräfte werden im wesentlichen vom Lenkradskelett aufgenommen, wobei für dessen Auslegung nicht nur die bei normalem Betrieb auftretenden Lenkkräfte, sondern auch die Beanspruchungen berücksichtigt werden müssen, die bei einem unfallbedingten Aufprall des fahrzeugführenden Insassen auftreten können.

Auf der anderen Seite ist man selbstverständlich bemüht, das Lenkrad so leicht wie möglich zu machen, d.h. Überdimensionierungen zu vermeiden und überall eine möglichst gute Ausnutzung der Materialfestigkeit zu erreichen, wobei selbstverständlich noch zu beachten ist, daß bei modernen Lenkrädern die Speichen nicht gleichmäßig über den Umfang des Kranzes verteilt sind, so daß für den unsymmetrisch abgestützten Lenkradkranz eine besonders sorgfältige konstruktive Gestaltung erforderlich ist.

Dazu bietet die gießtechnische Herstellung des Skeletts einen großen Spielraum, der bisher allerdings noch nicht konsequent genug ausgenutzt worden ist.

Aus Crashversuchen und der Untersuchung von bei Unfällen verformten bzw. zerstörten Lenkrädern ist bekannt, daß die in der Normalstellung des Lenkrades oben und unten liegenden Bereiche des Lenkradkranzes bei einem Aufprall besonders hohen Beanspruchungen ausgesetzt sind.

Der Erfindung liegt die Aufgabe zugrunde, das Skelett für ein Lenkrad der eingangs genannten Art unter Berücksichtigung dieser Erkenntnisse festigkeitsmäßig zu verbessern und nach Möglichkeit außerdem den erforderlichen Materialaufwand zu vermindern.

Zur Lösung dieser Aufgabe wird vorgeschlagen, daß der Kranz in den seitlichen Bereichen einen zur Lenkradrückseite hin offenen Querschnitt aufweist.

Bei den seitlichen Bereichen des Lenkrades liegen die Stellen maximaler Beanspruchung auf der Rückseite des Lenkrades, so daß sich hier die Verwendung eines nach hinten offenen Profils empfiehlt. Zwischen den nach vorne bzw. nach hinten offenen Bereichen ist ein H-förmiges Profil vorgesehen, dessen Quersteg seine Lage stetig verändert, so daß in Umfangsrichtung gesehen, beispielsweise ein U-förmiges Profil über ein H-förmiges Profil in ein umgekehrt U-förmiges Profil übergeht.

Mit der erfindungsgemäßen Profilgebung kann bei im wesentlichen über den gesamten Umfang gleich großer Querschnittsfläche des Lenkradkranzes eine optimale Anpassung an die unterschiedlichen Beanspruchungen, insbesondere bei einem Crashfall vorgenommen werden. Infolge der optimalen Materialausnutzung ist im allgemeinen außerdem eine Minderung des Gesamtmaterialaufwandes realisierbar.

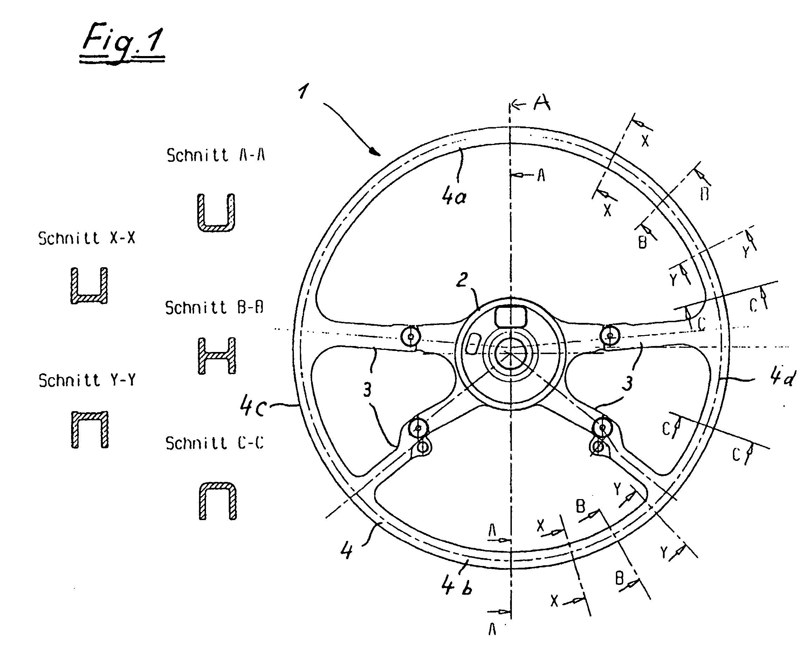

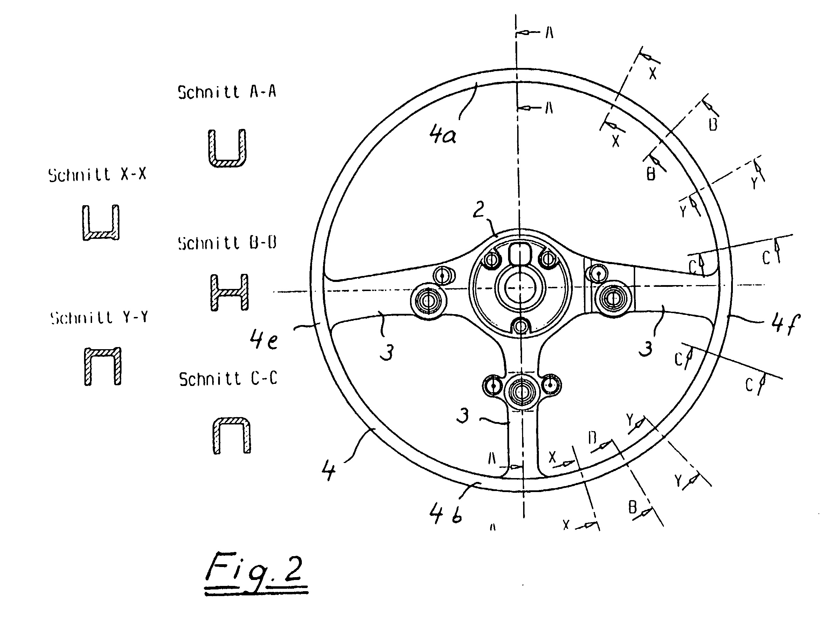

Vorteilhafte Ausgestaltungen des Erfindungsgedankens sind in den Unteransprüchen 2 bis 4 beschrieben. Weitere Einzelheiten werden anhand der in den Figuren 1 und 2 dargestellten Ausführungsbeispiele näher erläutert. Es zeigen.
- Fig. 1: eine Ausführungsform des erfindungsgemäßen Skelettes für ein Vierspeichenlenkrad in der Ansicht und in fünf näher angegebenen Schnitten
- Fig. 2: eine Ausführungsform des erfindungsgemäßen Lenkradskelettes für ein Dreispeichenlenkrad in der Ansicht und in fünf näher gekennzeichneten Schnitten.

Das in Fig. 1 dargestellte Lenkradskelett 1 umfaßt einen Nabenbereich 2, vier Speichen 3 und einen Lenkradkranz 4, dessen oberer und unterer Bereich mit 4a bzw. 4b und dessen seitliche Bereiche mit 4c und 4d bezeichnet sind. Im rechten Teil der Ansicht sind verschiedene Schnittstellen mit Großbuchstaben gekennzeichnet. Die entsprechenden Querschnittsformen sind links von der Ansicht des Lenkradskelettes als Schnittbilder dargestellt. In den Kranzbereichen 4a bzw. 4b ist ein nach vorne offener U-förmiger Querschnitt gemäß der Schnittdarstellung A-A vorgesehen, währen in den seitlichen Bereichen des Lenkradkranzes 4c und 4d ein nach hinten offener, umgekehrt U-förmiger Querschnitt gemäß der Schnittdarstellung C-C realisiert ist.

Zwischen den genannten Bereichen ist eine H-förmige Querschnittsform gemäß der Schnittdarstellung B-B vorgesehen, wobei die Schnittform A-A über die Schnittform X-X in die Schnittform B-B und dann über die Schnittform Y-Y in die Schnittform C-C übergeht. Von der Schnittform C-C verläuft der Übergang über die Schnittform Y-Y, B-B, X-X in die Schnittform A-A. Die gleiche Veränderung der Querschnittsform ist links von der vertikalen Mittellinie des Lenkradskelettes 1 symmetrisch ausgeführt.

Bei der Ausführungsform gemäß Fig. 2 ist das Lenkradskelett wiederum mit 1, der Nabenbereich mit 2, die Speichen mit 3 und der Lenkradkranz mit 4 bezeichnet. Auch die oberen und unteren Bereich des Skelettes 1 sind wie in Fig. 1 mit 4a und 4b bezeichnet. Die seitlichen Bereiche mit der Speichenanbindung sind hier mit 4e und 4f bezeichnet.

Hinsichtlich der Anordnung der Schnittformen A-A, B-B, C-C, X-X und Y-Y gilt das gleiche wie zu Fig. 1 ausgeführt. Eine weitergehende Erläuterung ist daher nicht erforderlich.

Der Erfindungsgedanke kann selbstverständlich auch bei anderen Lenkradformen angewendet werden, wenn nur darauf geachtet wird, daß die in der Normalstellung des Lenkrades oben und unten liegenden Bereiche einen nach vorne offenen U- oder V-förmigen Querschnitt aufweisen und daß die seitlichen Bereiche einen nach hinten offenen U- oder V-förmigen Querschnitt aufweisen und daß zwischen diesen Bereichen zweckmäßigerweise ein Querschnitt mit H-förmigem Profil vorgesehen wird, das stetig in die nach vorne bzw. nach hinten offenen U- oder V-förmigen Querschnitte übergeht.

## Patentansprüche

1. Lenkrad mit einem metallischen Skelett (1), das einen Nabenbereich (2), Speichen (3) und einen Kranz (4) umfaßt und das durch Gießen einteilig mit einem zumindest im Kranzbereich offenen, U- oder V-förmigen Querschnitt hergestellt ist, wobei der Kranz (4), bezogen auf eine normale Lenkradposition im Fahrzeug bei Geradeausfahrt, im oberen und unteren Bereich (4a, 4b) einen zur Lenkradvorderseite hin offenen Querschnitt aufweist, **dadurch gekennzeichnet, daß** der Kranz in den seitlichen Bereichen (4c, 4d) einen zur Lenkradrückseite hin offenen Querschnitt aufweist.

2. Lenkrad nach Anspruch 1, **dadurch gekennzeichnet, daß** bei einer Vierspeichenausführung die seitlichen, jeweils zwei Speichenanbindungen umfassenden Bereiche (4c, 4d) durchgehend einen zur Lenkradrückseite offenen Querschnitt aufweisen.

3. Lenkrad nach Anspruch 1, **dadurch gekennzeichnet, daß** bei einer Dreispeichenausführung der Kranz (4) im Bereich der seitlichen Speichenanbindungen (4e, 4f) einen zur Lenkradrückseite offenen Querschnitt, im übrigen einen zur Lenkradvorderseite offenen Querschnitt aufweist.

4. Lenkrad nach einem der Ansprüche 1 bis 3, **dadurch gekennzeichnet, daß** der Kranz (4) in den Übergangsbereichen zwischen den nach vorne bzw. nach hinten offenen Querschnitten einen im wesentlichen H-förmigen Querschnitt aufweist, bei dem sich die Höhenlage des Quersteges stetig von ganz unten (U-Querschnitt) nach ganz oben (umgekehrter U-Querschnitt) bzw. von ganz oben nach ganz unten verändert.

## Claims

1. A steering wheel comprising a metallic skeleton (1), which includes a hub region (2), spokes (3) and a rim (4) and which is produced by casting in one piece with a U- or V-shaped cross-section that is open at least in the rim region, the upper and lower regions (4a, 4b) of the rim (4), as related to a normal position of the steering wheel in the vehicle while driving straight ahead, having a cross-section that is open towards the front face of the steering wheel, **characterized in that** in the lateral regions (4c, 4d) the rim has a cross-section that is open towards the rear face of the steering wheel.

2. The steering wheel according to Claim 1, **characterized in that** in a four-spoked construction the lateral regions (4c, 4d), including two spoke connections each, have a cross-section that is continuously open towards the rear face of the steering wheel.

3. The steering wheel according to Claim 1, **characterized in that** in a three-spoked construction the rim (4), in the region of the lateral spoke connections (4e, 4f), has a cross-section that is open towards the rear face of the steering wheel, and otherwise has a cross-section that is open towards the front face of the steering wheel.

4. The steering wheel according to any of Claims 1 to 3, **characterized in that** the rim (4) has a substantially H-shaped cross-section in the transition regions between the cross-sections that are open towards the front and the rear, respectively, in which the vertical position of the cross-piece continuously varies from the very bottom (U-cross-section) to the very top (reverse U-cross-section) and from the very top to the very bottom, respectively.

## Revendications

1. Volant de direction comportant un squelette (1) métallique qui comprend une zone de moyeu (2), des rayons (3) et une couronne (4) et qui est fabriqué par moulage en une seule pièce avec une section transversale en forme de U ou de V, ouverte au moins dans la zone de la couronne, la couronne (4), par rapport à une position de volant de direction normale dans le véhicule lors d'une marche en ligne droite, présentant dans les zones supérieure et inférieure (4a, 4b) une section transversale ouverte vers la face antérieure du volant de direction, **caractérisé en ce que** la couronne présente dans les zones latérales (4c, 4d) une section transversale ouverte vers la face postérieure du volant de direction.

2. Volant de direction selon la revendication 1, **caractérisé en ce que** dans le cas d'une réalisation avec quatre rayons, les zones latérales (4c, 4d) comprenent chacune deux rattachements aux rayons qui présentent de manière continue une section transversale ouverte vers la face postérieure du volant de direction.

3. Volant de direction selon la revendication 1, **caractérisé en ce que** dans le cas d'une réalisation avec trois rayons, la couronne (4) présente, dans la zone des rattachements latéraux aux rayons (4e, 4f), une section transversale ouverte vers la face postérieure du volant de direction et en outre une section transversale ouverte vers la face antérieure du volant de direction.

4. Volant de direction selon l'une des revendications 1 à 3, **caractérisé en ce que** dans les zones de transition entre les sections transversales ouvertes vers l'avant et vers l'arrière, respectivement, la couronne (4) présente une section transversale sensiblement en forme de H, dans laquelle la position en hauteur de l'entretoise varie de manière continue de tout en bas (section transversale en forme de U) à tout en haut (section transversale en forme de U inversé) et de tout en haut à tout en bas, respectivement.
